# EUROPEAN PATENT APPLICATION

(11) **EP 4 472 023 A1**
(43) Date of publication of application: **04.12.2024**
(21) Application number: 23176792.2
(22) Date of filing: 01.06.2023
(51) Int. Cl.: H02J 7/34, E05B 81/86, H02J 9/06

(54) **VEHICLE DOOR LATCH**

(71) Applicant: Kiekert AG, 42579 Heiligenhaus (DE)
(72) Inventor: Merletti, Marco, 21010 Arsago Seprio (Varese) (IT)
(74) Representative: Michalski Hüttermann & Partner Patentanwälte mbB

(57) **Abstract**

The invention relates to an electronic circuit (22) for a vehicle door latch (1) of a motor vehicle (2) and configured to receive a main supply voltage from a main power source (8) of the motor vehicle (2) during a normal operating condition, comprising a supercapacitor group (3) configured for storing energy during the normal operating condition and for providing a backup supply voltage during an abnormal operating condition different from the normal operating condition, a boost converter (7) being fed by the supercapacitor group (3) and configured for providing a boost converted backup supply voltage during the abnormal operating condition, an integrated circuit (9) configured for controlling actuating of an electric motor (4) of the vehicle door latch (1) based on the boost converted backup supply voltage during the abnormal operating condition, and a buck boost converter (6) being fed by the supercapacitor group (3) and configured for feeding the integrated circuit (9) with a buck boost converted backup supply voltage during the abnormal operating condition.

## Description

### Technical Field

The invention relates to an electronic circuit for a vehicle door latch of a motor vehicle and configured to receive a main supply voltage from a main power source of the motor vehicle during a normal operating condition, comprising a supercapacitor group configured for storing energy during the normal operating condition and for providing a backup supply voltage during an abnormal operating condition different from the normal operating condition. The invention further relates to a method for operating a vehicle door latch of a motor vehicle, whereby the vehicle door latch comprises a supercapacitor group configured for storing energy during a normal operating condition and for providing a backup supply voltage during an abnormal operating condition different from the normal operating condition.

### Background Art

Several automotive systems require the presence of a backup energy source in a vehicle to provide electrical energy in substitution, or as an aid to a main power supply of the vehicle, in case of failure respectively abnormal operation condition or interruption of the main power supply. Such backup power source is usually kept in a charged state during normal operation by the main power supply of the vehicle, so as to be readily available as soon as the need arises, for example in case of an accident or crash of the vehicle.

US 2015/329009 A1 describes a backup energy source for an automotive system in a motor vehicle which is designed to receive a main supply voltage, during a normal operating condition, and to provide a backup supply voltage during an abnormal operating condition, different from the normal operating condition. The backup energy source has a control unit, and a supercapacitor group, operable by the control unit to store energy during the normal operating condition and to provide the backup supply voltage during the abnormal operating condition. A diagnostic module is coupled to the supercapacitor group to provide the control unit with information concerning an operating status of the supercapacitor group.

A general problem of such solutions is energy management performance, in particular during said abnormal operation condition.

### Summary of invention

It is therefore an object of the invention to provide an easy, cheap and/or reliable solution for an improved energy management for feeding a vehicle door latch with a backup supply voltage during an abnormal operating condition.

The object of the invention is solved by the features of the independent claims. Preferred implementations are detailed in the dependent claims.

Thus, the object is solved by an electronic circuit for vehicle door latch of a motor vehicle and configured to receive a main supply voltage from a main power source of the motor vehicle during a normal operating condition, comprising
a supercapacitor group configured for storing energy during the normal operating condition and for providing a backup supply voltage during an abnormal operating condition different from the normal operating condition,
a boost converter being fed by the supercapacitor group and configured for providing a boost converted backup supply voltage during the abnormal operating condition,
an integrated circuit configured for controlling actuating of an electric motor of the vehicle dorr latch based on the boost converted backup supply voltage during the abnormal operating condition, and
a buck boost converter being fed by the supercapacitor group and configured for feeding the integrated circuit with a buck boost converted backup supply voltage during the abnormal operating condition.

A key point of the proposed solution lies in provisioning of two converters, namely the buck boost converter which allows for optimizing energy usage during the abnormal operating condition, in particular for light loads for example being efficient at 50 µA and such wise also called respectively provided as high efficiency buck boost converter, and the boost converter for being powered on to for example motor drivers during the abnormal operation condition and preferably fitting requirements for motor currents, in particular efficient at several amperes and such wise also called respectively provided as powerful boost converter. By providing these two converters advantageously the supercapacitor group can be better deeply discharged compared to a direct connection and performance can be enhanced during the abnormal operating condition due to reducing losses.

In other words, the boost converter is preferably used to drive the electric motor for a release action, in particular mainly in an OFF state and ready to provide up to 3.5A at 8.5V for a few seconds with high efficiency, for example >80% i.e. high power in a short time. The buck boost converter is preferably sized for continuous functionality in crash, main power source failure and/or loss condition with a very light current load, such as for example 30 to 50 µA with very high efficiency, for example >88% and very low quiescent currents, such as for example <100 nA. Use of such buck boost topology allows for saving energy when an input voltage from the supercapacitor group is higher than an output and extended supercapacitor group discharging allowing the input voltage lower than the output voltage.

The main power source is preferably provided as a battery of the motor vehicle for example delivering 12 or 24 V DC. During the normal operating condition, the main power source preferably charges the supercapacitor group. The electric motor is preferably configured for actuating the vehicle door latch in respect to locking and unlocking a door of the motor vehicle. The electronic circuit can be provided as an electronic circuit board, such as for example a printed circuit board, PCB, on which the supercapacitor group, the boost converter, the integrated circuit and the buck boost converter are installed. The electronic circuit is preferably arranged in a separate electronics housing within the vehicle door latch, but can also be installed outside the electronic door latch.

More generally, the expression "vehicle door latch" should be understood as a means for locking a movable element between an open position and a closed position, thereby opening and closing an access to an inner compartment of a motor vehicle, for example including, boot, rear hatches, bonnet lid or other closed compartments, window regulators, sunroofs, in addition to the side doors of a motor vehicle. The proposed vehicle door latch allows for complying with security and safety regulations requiring opening for example of the vehicle doors, even during absence of the main power supply of the vehicle, or in case of interruptions or breaking of the electrical connection between the main power supply and the vehicle doors. Such kind of situation may occur, for example, in case of an accident or crash involving the vehicle.

The vehicle can be provided as an electrical vehicle. The vehicle door latch may comprise a housing, made of metal, plastics or a combination thereof. The supercapacitor group, in particular the electric motor, the boost converter, the integrated circuit and the buck boost converter are preferably provided within the housing. Besides that the supercapacitor group, the boost converter, the integrated circuit and the buck boost converter can be provided within an electronic housing arranged within the vehicle door latch.

The boost converter can be provided as any boost converter known from prior art, for example as a DC-to-DC power converter that steps up voltage, while stepping down current, from its input i.e. the supercapacitor group to its output, for example a motor driver. The boost converter is preferably provided as a class of switched-mode power supply, SMPS, containing at least two semiconductors, for example a diode and a transistor, and at least one energy storage element such as a capacitor, inductor, or two in combination. To reduce voltage ripple, filters made of capacitors, sometimes in combination with inductors, can be added to an output of the boost converter as load-side filter and/or as input supply-side filter.

The buck boost converter is preferably provided as a DC-to-DC converter that has an output voltage magnitude that is either greater than or less than an input voltage magnitude. The buck boost converter can be equivalent to a flyback converter using a single inductor instead of a transformer.

In the normal operating condition the main supply voltage is available from the main power source such that the supercapacitor group can be charged by the main power source. Thus, in the abnormal operating the main supply voltage is not available, for example as a result of respectively during a crash of the vehicle. The abnormal operating condition thus occurs for example in absence of the main power supply of the vehicle, or in case of interruptions or breaking of an electrical connection between the main power supply and vehicle doors operated by the vehicle door latch, for example in case of an accident or crash involving the vehicle. In contrast thereto the normal operating condition should be understood as a mode in which the main power supply provides the electrical energy for operating the electric motor.

In another preferred implementation the electronic circuit comprises a charger configured for charging the supercapacitor group based on the main supply voltage during the normal operating condition, in particular whenever power from the main supply voltage is available. Such charger may comprise temperature or voltage sensing circuits and/or a microprocessor controller to safely adjust a charging current and/or voltage, determine a state of charge, and cut off charging current and/or voltage at an end of charge.

According to a preferred implementation, the integrated circuit is provided as system basic chip. The system basic chip is preferably provided as an integrated circuit that includes various functions of automotive electronic control units, ECU, on a single die. The system basic chip may include embedded functions such as voltage regulators, supervision functions, reset generators, watchdog functions, bus interfaces, such as for example Local Interconnect Network, LIN, CAN bus or others, wakeup logic and/or power switches.

In another preferred implementation the electronic circuit comprises a motor driver controlled by the integrated circuit and configure for being connected respectively connected between the boost converter and the electric motor. The motor driver may comprise an integrated circuit, such as a H-bridge circuit, for stepping up a current for actuating the electric motor. Generally, a H-bridge is an electronic circuit that switches the polarity of a voltage applied to a load, here the main supply voltage and/or the boost converted voltage as voltage and the electric motor as load. By means of such H-bridge the electric motor can be run forwards or backwards, for example for locking or unlocking the door of the motor vehicle. The name H-bridge is derived from its common schematic diagram representation, with four switches configured as branches of a letter "H" and a load i.e. the electric motor connected as the cross-bar. A solid-state H-bridge is typically constructed using opposite polarity switches, such as PNP bipolar junction transistors or p-channel MOSFETs connected to the main power source and n-channel MOSFETs connected to ground. Alternatively, p-channel or n-channel MOSFETs can be used on both sides.

According to another preferred implementation the electric motor comprises a release motor, a cinching motor and a double lock motor. Preferably the motor driver comprises a release motor driver and a cinching motor driver. In another preferred implementation the motor driver comprises a release motor driver connected to the release motor and the double lock motor and comprises a cinching motor driver connected to the cinching motor and the double lock motor. Preferably the release motor driver actuates the release motor and/or the double lock motor and the cinching motor driver actuates the cinching motor and the double lock motor. The vehicle door latch and/or the electronic housing may comprise release motor contacts, cinching motor contacts and/or double lock motor contacts respectively connected to the release motor driver and the cinching motor driver and to which the release motor, the cinching motor and the double lock motor can be connected.

According to another preferred implementation the integrated circuit is being fed based on the fed main supply voltage during the normal operating condition. Preferably the integrated circuit is or-connected to the buck boost converter and the main supply voltage and/or the motor driver is or-connected to the boost converter and the main supply voltage. The vehicle door latch may comprise a main connector for receiving the main supply voltage from the main power supply.

According to a further preferred implementation the supercapacitor group comprises at least a first supercapacitor cell, preferably at least a first, a second and/or a third supercapacitor cells, connected to each other, to jointly provide the backup supply voltage. A supercapacitor cell, also referred to as supercapacitor, supercap, SC, or called an ultracapacitor, is typically a highcapacity capacitor with a capacitance value much higher than other capacitors, but with lower voltage limits, that bridges the gap between electrolytic capacitors and rechargeable batteries. The supercapacitor typically stores 10 to 100 times more energy per unit volume or mass than electrolytic capacitors, can accept and deliver charge much faster than batteries, and tolerates many more charge and discharge cycles than rechargeable batteries.

The supercapacitor cell comprises, when fully charged, for example the voltage of 2,45 V. Thus, if the first and the second supercapacitor cells are connected to each other, the jointly provided backup supply voltage equals 4,9 V. Preferably, at least two, two, three or four supercapacitor cells are connected in series forming the supercapacitor group. The vehicle battery preferably comprises a voltage of 12 V.

According to another preferred implementation the electronic circuit comprises a controller unit being fed with the buck boost converted backup supply voltage by the integrated circuit and configured for controlling the actuating of the electric motor based on the boost converted backup supply voltage during the abnormal operating condition. The controller unit preferably comprises a microprocessor, a microcontroller or analogous computing module and/or is configured for controlling the motor driver.

According to a further preferred implementation the integrated circuit comprises a low-dropout regulator and/or a CAN, controller area network, bus interface configured for controlling actuating of the electric motor based on the boost converted backup supply voltage during the abnormal operating condition. The low-dropout regulator, LDO regulator, is preferably provided as a DC linear voltage regulator that can regulate an output voltage even when a supply voltage is very close to the output voltage. The CAN bus interface is preferably configured for controlling the controller unit. Preferably the buck boost converter is connected to the low-dropout regulator, which is configured for providing the buck boost converted voltage to the controller unit.

The object is further solved by a vehicle door latch comprising the electronic circuit as described before. In another preferred implementation the vehicle door latch comprises the electric motor configured for actuating the vehicle door latch based on the main supply voltage during the normal operating condition.

The object is even further solved by a motor vehicle comprising a vehicle door latch as described before and the main power source, whereby the main power source is preferably connected to the charger, to the integrated circuit and/or the motor driver.

The object is even further solved by a method for operating a vehicle door latch of a motor vehicle, whereby the vehicle door latch comprises
a supercapacitor group configured for storing energy during a normal operating condition and for providing a backup supply voltage during an abnormal operating condition different from the normal operating condition, and comprising the steps of:
providing a boost converted backup supply voltage during the abnormal operating condition by a boost converter being fed by the supercapacitor group;
controlling actuating of an electric motor of the vehicle door latch based on the boost converted backup supply voltage during the abnormal operating condition by an integrated, and
feeding the integrated circuit with a buck boost converted backup supply voltage during the abnormal operating condition by a buck boost converter being fed by the supercapacitor group.

Further implementations and advantages of the method can be derived by the person skilled in the art from the vehicle door latch as described above.

### Brief description of drawings

These and other aspects of the invention will be apparent from and elucidated with reference to the implementation described hereinafter.

In the drawings:

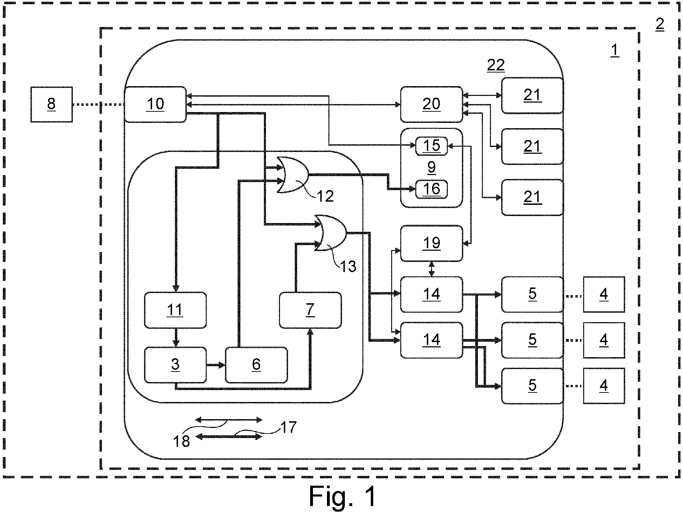

Fig. 1 shows a schematic electronic circuit diagram comprising a supercapacitor group, an electric motor for actuating a vehicle door latch, a boost converter, an integrated circuit and a buck boost converter of the vehicle door latch according to a preferred implementation.

### Description of implementations

Fig. 1 shows a schematic electronic circuit diagram with an only schematically depicted vehicle door latch 1 of an only schematically depicted motor vehicle 2. The motor vehicle 2 includes four side doors, not shown, which are each equipped with one vehicle door latch 1. Besides that the vehicle door latch 1 can be associated to rear hatches, bonnet lid or other closed compartments, window regulators, sunroofs, in addition to the side doors of such motor vehicle 2.

The vehicle door latch 1 comprises a housing made of plastic, metal or a combination thereof. The housing houses arranged therein, within a separate electronic housing, not shown, an electronic circuit 22 comprising a supercapacitor group 3, motor contacts 5 for connecting an electric motor 4, a boost converter 6, a buck boost converter 7 and an integrated circuit 9. The motor vehicle 2 comprises a main power source 8 provided as standard vehicle battery known from prior art and delivering a main supply voltage of 12 V DC during a normal operating condition. The vehicle door latch 1 respectively the electronic circuit 22 further comprises a main connector 10 connected to the main power source 8.

The main connector 10 such wise provides a main supply voltage received from the main power source 8, i.e. during the normal operating condition when the main supply voltage is available, to a charger 11, which charges the supercapacitor group 3 with the main supply voltage. The supercapacitor group 3 comprises a first and a second supercapacitor cells connected in series. Each supercapacitor cell delivers, when fully charged, a voltage of 2,45 V DC i.e. the supercapacitor group 3 delivers a backup supply voltage of 4,9 V DC during an abnormal operating condition different from the normal operating condition. Besides that more than two supercapacitors cells can be connected in series and such wise delivering a higher backup supply voltage.

The supercapacitor group 3 feeds both the buck boost converter 6 and the boost converter 7. The buck boost converter 6 provides, during the abnormal operating condition, as output a boost converted backup supply voltage which is or-connected with the main supply voltage by means of a buck boost or-gate 12 thereby feeding the integrated circuit 9. The boost converter 7 provides a boost converted backup supply voltage during the abnormal operating condition, which is or-connected with the main supply voltage by means of a boost or-gate 13 thereby feeding two motor drivers 14, namely a release motor driver and a cinching motor driver.

The integrated circuit 9 is provided as a system basic chip comprising a CAN bus interface 15 and a low-dropout regulator 16, to which an output of the buck boost or-gate 12 is connected. A respective output of the low-dropout regulator 16 is connected to microprocessor-based controller unit 19. Such wise the controller unit 19 is fed with the buck boost converted backup supply voltage by the integrated circuit 9 and is configured for controlling the actuating of the electric motor 4 based on the boost converted backup supply voltage during the abnormal operating condition as described next.

While all connections described so far are power connections 17 i.e. convey a voltage respectively a current, the electronic circuit 22 also comprises signal connections 18. The main connector 10 comprises such signal connection 18 connecting the controller unit 19 via the CAN bus interface 15. The controller unit 19 connects the two motor drivers 14 for such wise controlling actuating of the electric motor 4 based on the boost converted backup supply voltage during the abnormal operating condition.

As indicated before, the two motor driver 14 are connected in terms of power connections 17 between the boost converter 7 and the electric motor 4. Specifically, the electronic circuit 22 comprises three motor contacts 5 for connecting three electric motors 4, namely a release motor, a cinching motor and a double lock motor. A respective release motor contact 5 is fed by a respective release motor driver 14, a respective release cinching motor 5 is fed by a respective cinching motor driver 14 and a respective double lock contact 5 is fed by both the release motor driver 14 and the cinching motor driver 14.

The electronic circuit 22 further comprise an I/O interface 20 connected via a signal connection 18 to the main connector 10. Said I/O interface 20 connects via a signal connection 18 three switch contacts 21, namely a primary switch contact, a secondary switch contact and a open switch contact.

While the invention has been illustrated and described in detail in the drawings and foregoing description, such illustration and description are to be considered illustrative or exemplary and not restrictive; the invention is not limited to the dis-closed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Bezugszeichenliste

- 1: vehicle door latch
- 2: motor vehicle
- 3: supercapacitor group
- 4: electric motor
- 5: motor driver
- 6: buck boost converter
- 7: boost converter
- 8: main power source
- 9: integrated circuit
- 10: main connector
- 11: charger
- 12: buck boost or-gate
- 13: boost or-gate
- 14: motor driver
- 15: can bus interface
- 16: low-dropout regulator
- 17: power connection
- 18: signal connection
- 19: controller unit
- 20: I/O interface
- 21: switch contact
- 22: electronic circuit

## Claims

1. Electronic circuit (22) for a vehicle door latch (1) of a motor vehicle (2) and configured for receiving a main supply voltage from a main power source (8) of the motor vehicle (2) during a normal operating condition, comprising
a supercapacitor group (3) configured for storing energy during the normal operating condition and for providing a backup supply voltage during an abnormal operating condition different from the normal operating condition,
a boost converter (7) being fed by the supercapacitor group (3) and configured for providing a boost converted backup supply voltage during the abnormal operating condition,
an integrated circuit (9) configured for controlling actuating of an electric motor (4) of the vehicle door latch (1) based on the boost converted backup supply voltage during the abnormal operating condition, and
a buck boost converter (6) being fed by the supercapacitor group (3) and configured for feeding the integrated circuit (9) with a buck boost converted backup supply voltage during the abnormal operating condition.

2. Electronic circuit (22) according to the previous claim, comprising a charger (11) configured for charging the supercapacitor group (3) based on the main supply voltage during the normal operating condition.

3. Electronic circuit (22) according to any of the previous claims, whereby the integrated circuit (9) is provided as system basic chip.

4. Electronic circuit (22) according to the previous claim, comprising a motor driver (14) controlled by the integrated circuit (9) and configured for being connected between the boost converter (7) and the electric motor (4) .

5. Electronic circuit (22) according to any of the previous claims, whereby the integrated circuit (9) is being fed based on the fed main supply voltage during the normal operating condition.

6. Electronic circuit (22) according to any of the previous claims, whereby the supercapacitor group (3) comprises at least a first supercapacitor cell, preferably at least a first, a second and/or a third supercapacitor cells, connected to each other, to jointly provide the backup supply voltage.

7. Electronic circuit (22) according to any of the previous claims, comprising a controller unit (19) being fed with the buck boost converted backup supply voltage by the integrated circuit (9) and configured for controlling the actuating of the electric motor (4) based on the boost converted backup supply voltage during the abnormal operating condition.

8. Electronic circuit (22) according to any of the previous claims, whereby the integrated circuit (9) comprises a low-dropout regulator (16) and/or a CAN bus interface (15) configured for controlling actuating of the electric motor (4) based on the boost converted backup supply voltage during the abnormal operating condition.

9. Vehicle door latch (1) comprising an electronic circuit (22) according to any of the previous claims.

10. Vehicle door latch (1) according to the previous claim, comprising the electric motor (4) configured for actuating the vehicle door latch (1) based on the main supply voltage during the normal operating condition.

11. Vehicle door latch (1) according to the previous claim, whereby the electric motor (4) comprises a release motor (4), a cinching motor (4) and a double lock motor (4) .

12. Vehicle door latch (1) according to the previous claim, whereby the motor driver (14) comprises a release motor driver (14) connected to the release motor (4) and the double lock motor (4) and comprises a cinching motor driver (14) connected to the cinching motor (4) and the double lock motor (4).

13. Motor vehicle comprising a vehicle door latch (1) according to any of the previous four claims and the main power source (8).

14. Method for operating a vehicle door latch (1) of a motor vehicle (2), whereby the vehicle door latch (1) comprises
a supercapacitor group (3) configured for storing energy during a normal operating condition and for providing a backup supply voltage during an abnormal operating condition different from the normal operating condition, and comprising the steps of:
providing a boost converted backup supply voltage during the abnormal operating condition by a boost converter (7) being fed by the supercapacitor group (3);
controlling actuating of an electric motor (4) of the vehicle door latch (1) based on the boost converted backup supply voltage during the abnormal operating condition by an integrated circuit (9), and
feeding the integrated circuit (9) with a buck boost converted backup supply voltage during the abnormal operating condition by a buck boost converter (6) being fed by the supercapacitor group (3).
